# EUROPEAN PATENT SPECIFICATION

(11) **EP 1 410 590 B1**
(45) Date of publication and mention of the grant of the patent: **13.04.2005**
(21) Application number: 01993095.7
(22) Date of filing: 31.10.2001
(51) Int. Cl.: H04L 25/02

(54) **LOW SWING COMMUNICATION SYSTEM**
KOMMUNIKATIONSSYSTEM MIT GERINGER AUSLENKUNG
SYST ME DE COMMUNICATION FAIBLE EXCURSION

(30) Priority: 31.10.2000 US 244178 P
(43) Date of publication of application: 21.04.2004
(73) Proprietor: Acuid Corporation (Guernsey) Limited, St. Peter Port, Guernsey GY1 4HP (GB)
(72) Inventor: ATYUNIN, Vasily Grigorievich, St.Petersburg 196211 (RU); DEAS, Alexander Roger, Edinburgh, Central Scotland EH22 1ST (GB)
(86) International application number: PCT/RU2001/000485
(87) International publication number: WO 2002/037782

(56) References cited:
- WO-A-99/10982
- US-A- 5 767 703

## Description

### Field of the invention

The present invention relates generally to communication systems and, more particularly, to transmitting and receiving circuits for driving data over a communication cable.

### Description of the Related Art

Contemporary high speed communication systems transmit a signal down a line with a terminating voltage and terminating resistance, normally located near the receiver. The effect of the transmitter is to send a fully saturated digital signal into the transmission line at the same impedance as the line itself such that any reflections from impedance anomalies in the line do not cause further reflections from the transmitter. The receiver has a terminating load at the same impedance as the transmission line. The terminating resistances are arranged in very high speed systems to create a terminating voltage that is typically the median of the voltage value of the 1 and 0 of the digital signal.

When the operation of these systems is analysed in detail, it is apparent that the threshold is near but often not at the terminating voltage and that the hysteresis of the receiver is in the order of a few millivolts, even though the signal swing is typically one to three volts. This means that when the signal is transmitted, only one percent of the time taken to slew the signal from a 0 to a 1 is actually changing the value at the receiver.

One effective technique used to make communication systems run faster without such problems is to reduce the voltage swings below the full supply rails. Selected signals are operated in a "low voltage swing" manner in order to reduce power consumption and increase the performance of these devices. Low voltage swing signals typically represent digital data with a representative voltage that is less than the supply voltage (Vdd) level. Low swing voltage signals are typically generated in true/complement pairs, referred to as "differential" pairs. The prior art receivers operate by sensing the voltage differential between the true/complement pair to determine the logic level of the signal.

For example, a receiver circuitry may be powered by a Vdd supply voltage of 3.3 Volts. An associated pair of low voltage swing signals may use a voltage of 1.9 Volts to represent logic high data and 1.1 Volts to represent logic low data. Such low voltage swing signals can increase performance because the amount of time to generate a voltage differential of 0.8 Volts is significantly shorter than to transition that signal from 0 to 3.3 Volts.

This creates a new requirement for fast, low-swing data receivers and output drivers. While low voltage swing signals present the above benefits, they also add additional design requirements, whereby the performance of drive transistors can substantially vary depending on their operating temperature, supply voltage, the process used for manufacturing, etc.

Attempts have been made to compensate these variances and adjust the driver output. Thus, according to US 5,767,703 a driving circuit includes an internal feedback loop to achieve a high degree of symmetry of the source and sink part of the driver. Similar, according to WO 99/10982 for a driver for interfacing dynamic RAM's, the driver output is adjusted to match a reference. However, another important parameter influencing the transmitter's performance are the receiver's characteristics, in particular the ones that influence the signal swing of the driver. These parameters include, but are not limited to, the hysteresis of the receiver and reference voltage at the receiver and may vary based on the parameters used to fabricate the receiver. As those parameters change, or as temperature changes, the performance of the receiver correspondingly changes and influences the driver's characteristics that become unstable.

However, in communication circuits of the prior art, for example, as those mentioned above, the parameters of a transmitter are typically selected with no regard to the requirements of a particular receiver but so as to provide, with substantial safety margin, compatibility with a wide range of receivers. This causes the increase in swing and power losses and the reduction of the communication speed.

The object of the invention is to reduce the voltage swing at the receiver, preferably to make it as close to the minimum as practical given the noise within the system, such that the transmitter can send more data than would be possible under the circumstances where time was spent slewing signals outside the hysteresis band of the receiver.

### Summary of the Invention

The present invention provides a communication system which avoids or at least alleviates the above mentioned disadvantages of the prior art.

According to one aspect of the present invention, a communication system comprises a driving circuit having a controlled output voltage levels, and a receiving circuit connected to the driving circuit, the receiving circuit having at least one channel for receiving a main signal, wherein the receiving circuit further provides a feedback to the driver to adjust the parameters of the driver to the receiver's characteristics. The driving circuit may be connected to the receiving circuit by a cable, a trace on a circuit board, or any other means of electrical connection, such as a transmission line.

The parameters of the driver may include maximum and minimum voltage or current levels.

Preferably, the feedback comprises at least one auxiliary channel. The auxiliary channel may transfer back to the driver an information from, for example, a ring oscillator circuit used for measuring the parameters of the main receiver. The ring oscillator circuit of the receiving device can be based on an additional receiver identical to the main receiver.

Preferably, the ring oscillator circuit of the receiver is connected to a low pass filter for selecting a voltage required for properly terminating the receiver. Preferably, the selected voltage after being filtered is used to set up the terminating voltage and reference voltage, as the incorrect terminating voltage increases swing and skew in the system.

Preferably, the ring oscillator circuit of the receiver is connected to a high pass filter as well. Preferably, the selected signal after being filtered is applied to an amplitude detector for getting information on the receiver hysteresis.

Any other means can be used to get the information on the transition voltage and hysteresis value of the receiver, say a of low pass filter and a peak detector.

Preferably, the driving circuit of the communication system comprises a pair of transistors and a respective pair of buffers.

In case it is undesirable to have an additional connections between the receiver and the driver, the driving circuit of the communication system may comprise it own copy of an auxiliary receiver, which is also identical to the main receiver, preferably in combination with a low pass filter, a high pass filter and an amplitude detector.

The combination of the above features enables transmission and reception of electronic communications orders of magnitude faster than is possible using prior art technique. This is particularly useful when combined with systems that minimise the skew of a high speed signal. In the case for example where the skew is maintained to +/-10ps, the present invention would allow up to 50Gbps to be transmitted per wire using the same implementation technology that is currently limited in operation to 500Mbps.

In another aspect, the invention is, in a communication system, a receiver that generates a signal representing parameters bearing information on the maximum and minimum levels, preferably voltage levels, or, possibly, current levels in some current mode devices, that are needed to cause an input signal at the receiver to be received as a logical one and as a logical zero.

The signal generated by the receiver may be implemented in a digital signal, a single-ended signal, a differential analogue signal or another type of the signal.

According to still another aspect of the present invention, a method of high speed low swing communicating is proposed comprising the steps of:
providing negative and positive voltage or current levels at a driver for driving a communication circuit;
generating a signal at a receiver connected to the driver, the signal being indicative of parameters bearing information on the maximum and minimum voltage or current levels to cause an input signal at the receiver to be received as a logical one and as a logical zero;
wherein the output signal swing of the driver is adjusted using the signal generated by the receiver.

The maximum and minimum levels of the signal generated by the receiver may be voltage, current or other levels.

Preferably, the output swing of the driver is adjusted to the receiver's hysteresis. Preferably, the output swing shall exceed the hysteresis level, say, be twice as high as the hysteresis level.

Preferably, the method further comprises the use of another receiver to adjust the driver with respect to hysteresis, reference voltage, or a combination of both these features.

It shall be also appreciated that though the embodiments described hereinbelow explain the idea of the invention using a single ended signal, the signal generated by the receiver may be implemented as well in a differential analogue signal or a signal of another type.

### Brief Description of the Drawings

Fig. 1 a is an example diagram of a preferred embodiment of a low swing communication circuit with a receiver according to the present invention.
Fig. 1b is a typical example of a simple low pas filter comprising a resistor, a capacitor, and an output buffer, which can be used in the present invention.
Fig. 1c is a typical example of a high pass filter which can be used in the present invention.
Fig. 2 is an example diagram of another embodiment of the low swing communication circuit according to the present invention.
Fig.3 is a diagram illustrating the operation of a low swing communication circuit shown in Fig.1a.

### Detailed Description of the Invention

The present invention relates to a low swing communication system. The following description is presented to enable one of ordinary skill in the art to make and use the invention as provided in the context of a particular application and its requirements. Various modifications to the preferred embodiment will be apparent to those with skill in the art, and the general principles defined herein may be applied to other embodiments. Therefore, the present invention is not intended to be limited to the particular embodiment shown and described, but is to be accorded the widest scope consistent with the principles and novel features herein disclosed.

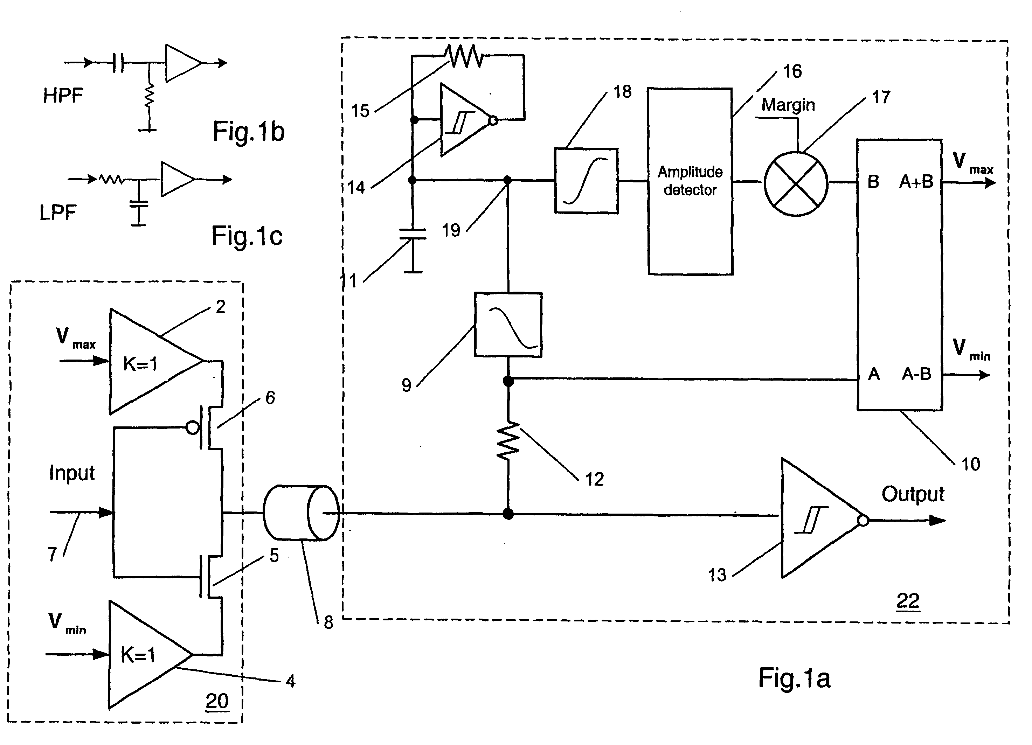

In Fig.1a a low swing communication system according to the present invention is shown comprising a transmitter 20 driving a transmission line 8. The transmitter 20 comprises a complementary pair of transistors 5 and 6 powered by voltages Vₘᵢₙ and Vₘₐₓ respectively. The pair is controlled by an input signal 7. Vₘᵢₙ and Vₘₐₓ are provided by buffers 2 and 4. The transmission line 8 may be a cable, a trace on a circuit board or any other means of electrical connection between the transmitter 20 and a receiving circuit 22.

Further in Fig.1a, the receiving circuit 22 comprises a receiver 13 having a certain degree of hysteresis and integrated with a circuit that generates a terminating voltage and also provides values of Vₘₐₓ and Vₘᵢₙ to the transmitter. This circuit comprises a ring oscillator formed by a receiver 14 identical to receiver 13, a resistor 15, and a capacitor 11.

Circuit 10 comprises an adder and subtractor and is used to get Vₘₐₓ and Vₘᵢₙ based on the threshold level and on the hysteresis value.

An example of a simple low pass filter is illustrated in Fig.1b as comprising a resistor, a capacitor, and an output buffer. An example of high pass filter is presented in Fig.1c.

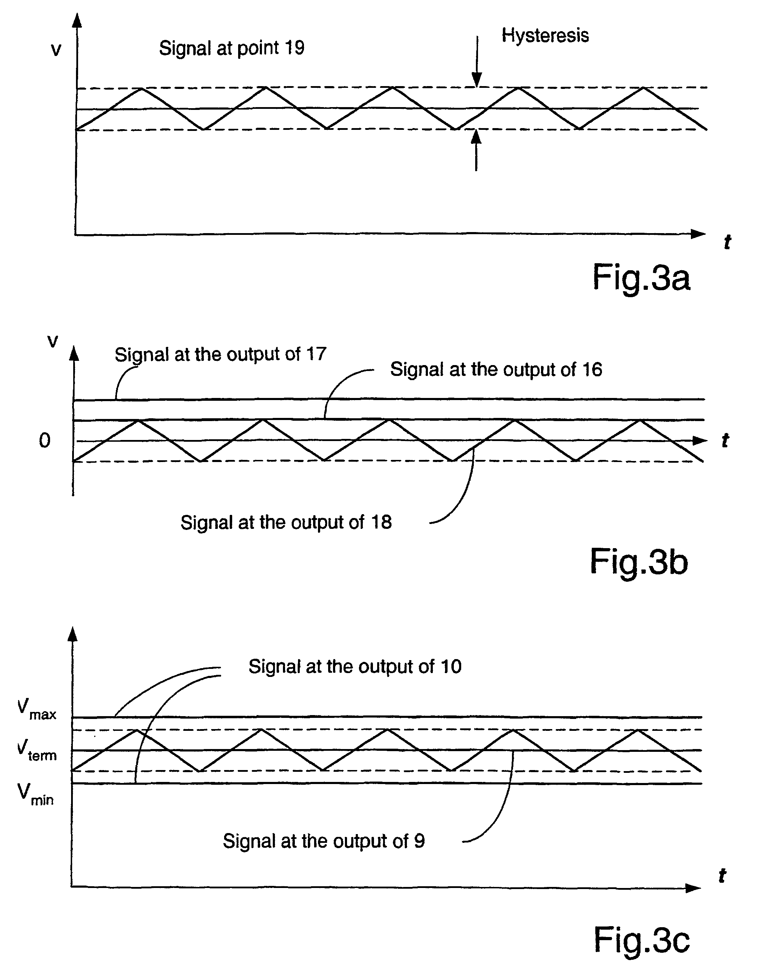

The system operates as follows. The ring oscillator will produce a waveform which is approximately triangular switching by the extent of its hysteresis around a transition voltage. At point 19, the signal generated by the ring oscillator represents, as shown in Fig. 3a, the hysteresis and the transition voltage Vtrans inherent to the receiver 14. The transition voltage selected by the low pass filter 9, as shown in Fig 3c, is used for terminating the main receiver 13 by the resistor 12, whereas the information relating to hysteresis is obtained from the signal generated by the ring oscillator after selecting with a high pass filter 18 by amplitude detector 16, as shown in Fig.3b.

The hysteresis value (signal at the output of 16) provided to the circuit 10 is increased by a required margin factor by multiplier 17 as shown by the signal at the output of 17 in Fig.3b. An amplifier can be used instead of the multiplier in order to get a proper margin. The obtained Vₘₐₓ and Vₘᵢₙ shown in Fig.3c as signals at the output of circuit 10 are supplied to the transmitter circuit 20. These signals reflect the amplitude the driver must drive when seen at the receiver 13 to create a logical one or zero.

At very high frequencies, transmission lines have losses which can be large. The amplification in the values of V ₘₐₓ and V ₘᵢₙ, either in the receiver, in the driver or independently, allows for this loss to be compensated.

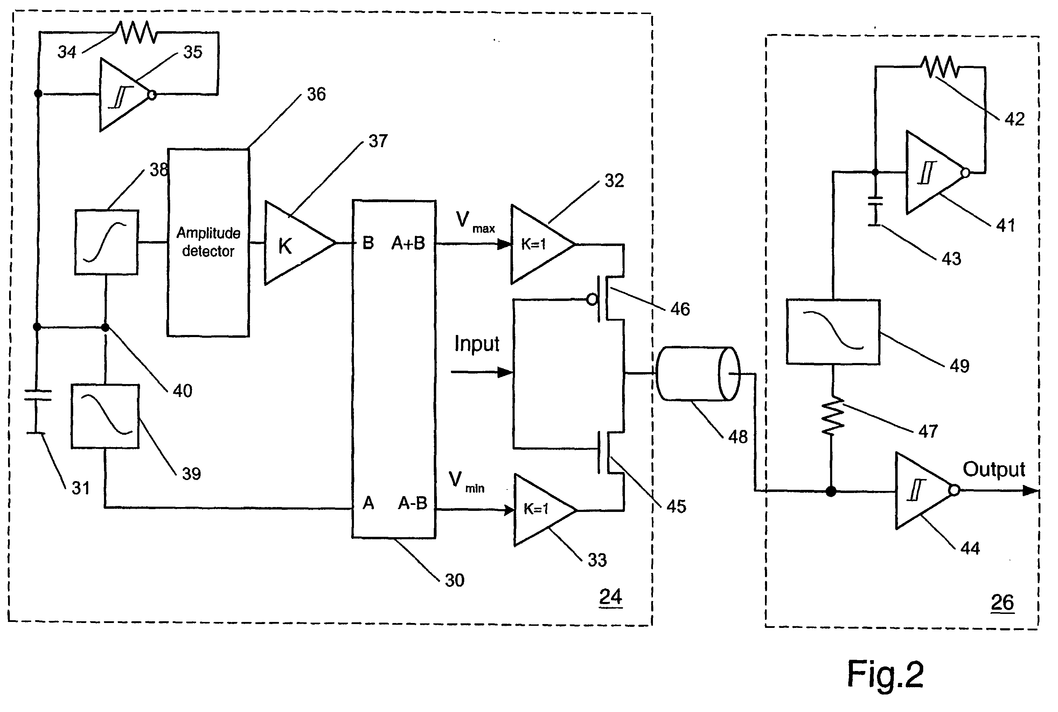

In a further embodiment shown in Fig. 2, no additional channels are required to get information from the receiver, preferably it is possible when identical chips are used on the driver and the receiver ends and they are in similar conditions in terms of supply voltage and temperature.

In Fig.2 a low swing communication system according to the present invention is shown comprising a transmitter 24 driving a transmission line 48. The transmitter 24 comprises a complementary pair of transistors 45 and 46 powered by voltages Vₘᵢₙ and Vₘₐₓ respectively. The transmission line 48 may be a cable, a trace on a circuit board or any other means of electrical connection between the transmitter 24 and a receiving circuit 26.

In this embodiment, the transmitter comprises an auxiliary receiver 35 identical to the main receiver 44 having a certain degree of hysteresis. The auxiliary receiver 35 together with resistor 34 and capacitor 31 forms a ring oscillator which produces an approximately triangular waveform. At point 40, the signal generated by the ring oscillator represents the hysteresis and transition voltage inherent to the receiver 35. The transition voltage selected by the low pass filter 39 is used as an input A to the circuit 30, whereas the information relating to hysteresis is obtained by amplitude detector 36 after extracting with a high pass filter 38 and is used as input B to the circuit 30 for generating maximum and minimum levels.

Examples of a simple low and high pass filters are illustrated in Fig.1b and Fig. 1c as has been already mentioned.

Similarly to the system presented in Fig. 1a, a circuit 30 in the embodiment shown in Fig.2 comprises an adder-subtractor and is used to get Vₘₐₓ and Vₘᵢₙ based on the transition voltage and on the hysteresis value. The hysteresis value supplied to the circuit 30 is increased by an amplifier 37 in order to get required margin which will be defined by the amplification coefficient K. The obtained Vₘₐₓ and Vₘᵢₙ are supplied using buffers 33 and 32 to the transistors 45 and 46.

A main receiver 44 is integrated within a receiving circuit 26 and generates a terminating voltage. That circuit 26 comprises additionally a ring oscillator consisting of a receiver 41, resistor 42 and capacitor 43, and a low pass filter 49 which function in the same manner as explained with reference to Fig.1.

Generally, the driver in any of these systems moves the output signal from a value of Vₘᵢₙ or Vₘᵢₙ minus a safety margin, to Vₘₐₓ or Vₘₐₓ plus a safety margin. This eliminates the need for a saturated signal, reduces greatly the energy needed to create and transmit a signal from one system to another, and increases the maximum frequency data that can be transmitted from the driver to the receiver.

It shall be also appreciated that, in addition to the present invention enabling high speed point to point communications, the invention can also operate in a bus environment where there may be more than one master and more than one slave. In the case where one master must drive more than one slaves, the master may interrogate each of the slaves using control bits or control protocol to determine which of the slaves respond. The maximum setpoint is taken from the slave with the maximum input level, and the minimum level from the slave with the minimum level.

## Claims

1. A communication system comprising:
a driving circuit (20; 24) comprising a driver (5.6; 45,46) with controlled output voltage or current levels; and
a receiving circuit (22; 26) comprising a main receiver (13; 44) connected to the driver, the receiver (13; 44) having at least one channel for receiving main signal,
**characterised in that**
the parameters of the driver (5,6; 45,46) are adjusted to the receiver's characteristics by using a signal generated by an auxiliary circuit (14; 35) reproducing one or more characteristics of the main receiver (13; 44).

2. The communication system according to claim 1, wherein the auxiliary circuit (14) is incorporated in the receiving circuit (22).

3. The communication system according to claim 1, wherein the auxiliary circuit (35) is incorporated in the driving circuit (24).

4. The communication system according to any one of claims 1 to 3, wherein the auxiliary circuit (14) comprises a copy of the main receiver (13).

5. The communication system according to any one of claims 1 to 4, wherein the receiver's characteristics include the hysteresis.

6. The communication system according to any one of claims 1 to 5, wherein the receiver's characteristics include the reference voltage.

7. The communication system according to any one of claims 1 to 6, wherein the auxiliary circuit (14; 35; 41) is incorporated in a ring oscillator circuit (11,14,15; 31,34,35; 41,42,43), the signal from the ring oscillator being used to adjust the parameters of the driver to the receiver's characteristics.

8. The communication system according to any one of claims 1 to 7, wherein the auxiliary circuit is made on the same integrated circuit or an integrated circuit identical to the integrated circuit used to make the main receiver.

9. The communication system according to any one of claims 1 to 8, wherein the auxiliary receiver (14, 41) is used to obtain the information on the main receiver (13; 44), which includes but not limited to a terminating voltage and reference voltage of the main receiver.

10. A method of low swing communication comprising the steps of:
providing voltage or current levels at a driver (5,6; 45,46) for driving a communication circuit;
adjusting the output signal of the driver (5,6; 45,46);
**characterised in that** the output signal of the driver (5,6; 45,46) is adjusted using a signal generated at a receiver (13, 44) connected to the driver or at the driver, the signal being indicative of parameters bearing information on the said voltage or current levels to cause an input signal at the receiver (13, 44) to be received as a logical one and as a logical zero.

11. A method according to claim 10, wherein the output swing of the driver is adjusted to the receiver's hysteresis.

12. A method according to claim 10 or 11, wherein the terminating voltage is adjusted to the receiver's transition voltage.

13. A method according to any one of claims 10 to 12, further comprising the use of another receiver to adjust the driver with respect to hysteresis, reference voltage, or a combination of both these features.

14. A method according to claim 13, wherein the other receiver is located at the driver.

## Patentansprüche

1. Kommunikationssystem, umfassend:
eine Treiberschaltung (20, 24), enthaltend einen Treiber (5, 6; 45, 46) mit gesteuerten Ausgangs-Spannungs- oder Strompegeln; und
eine Empfangsschaltung (22; 26), die einen Hauptempfänger (13; 44) enthält, der mit dem Treiber verbunden ist, wobei der Empfänger (13; 44) über wenigstens einen Kanal zum Empfangen eines Hauptsignals verfügt,
**dadurch gekennzeichnet, dass**
die Parameter des Treibers (5, 6; 45, 46) auf die Eigenschaften des Empfängers mit Hilfe eines Signals eingestellt sind, das durch eine Hilfsschaltung (14; 35) erzeugt wird, die eine oder mehrere Eigenschaften des Hauptempfängers (13; 44) reproduziert.

2. Kommunikationssystem nach Anspruch 1, bei dem die Hilfsschaltung (14) in der Empfängerschaltung (22) enthalten ist.

3. Kommunikationssystem nach Anspruch 1, bei dem die Hilfsschaltung (35) in der Treiberschaltung (24) enthalten ist.

4. Kommunikationssystem nach einem der Ansprüche 1 bis 3, bei dem die Hilfsschaltung (14) eine Kopie des Hauptempfängers (13) enthält.

5. Kommunikationssystem nach einem der Ansprüche 1 bis 4, bei dem die Eigenschaften des Empfängers die Hysterese beinhalten.

6. Kommunikationssystem nach einem der Ansprüche 1 bis 5, bei dem die Eigenschaften des Empfängers die Referenzspannung beinhalten.

7. Kommunikationssystem nach einem der Ansprüche 1 bis 6, bei dem die Hilfsschaltung (14; 35; 41) in einer Ringoszillatorschaltung (11, 14, 15; 31, 34, 35; 41, 42, 43) enthalten ist und das Signal vom Ringoszillator verwendet wird, um die Parameter des Treibers auf die Eigenschaften des Empfängers einzustellen.

8. Kommunikationssystem nach einem der Ansprüche 1 bis 7, bei dem die Hilfsschaltung aus derselben integrierten Schaltung oder einer integrierten Schaltung besteht, die der integrierten Schaltung identisch ist, die verwendet wird, um den Hauptempfänger auszubilden.

9. Kommunikationssystem nach einem der Ansprüche 1 bis 8, bei dem der Hilfsempfänger (14, 41) verwendet wird, um die Informationen über den Hauptempfänger (13; 44) zu erhalten, die ohne darauf beschränkt zu sein, eine Abschlußspannung und eine Referenzspannung über den Hauptempfänger enthalten.

10. Verfahren einer Niedrigschwingungs-Kommunikation, umfassend folgende Schritte:
Bereitstellen von Spannungs- oder Strompegeln an einem Treiber (5, 6; 45, 46) zum Ansteuern einer Kommunikationsschaltung;
Einstellen des Ausgangssignals des Treibers (5, 6; 45, 46);
**dadurch gekennzeichnet, dass** das Ausgangssignal des Treibers (5, 6; 45, 46) mit Hilfe eines Signals eingestellt wird, das an einem Empfänger (13, 44), der mit dem Treiber verbunden ist, oder am Treiber erzeugt wird, wobei das Signal für Parameter kennzeichnend ist, die Informationen über die Spannungs- oder Strompegel enthalten, um zu bewirken, dass ein Eingangssignal am Empfänger (13, 44) als logische Eins und als logische Null empfangen wird.

11. Verfahren nach Anspruch 10, bei dem die Ausgangsschwingung des Treibers auf die Hysterese des Empfängers eingestellt wird.

12. Verfahren nach Anspruch 10 oder 11, bei dem die Abschlußspannung auf die Übergangsspannung des Empfängers eingestellt wird.

13. Verfahren nach einem der Ansprüche 10 bis 12, weiterhin enthaltend die Verwendung eines weiteren Empfängers, um den Treiber im Bezug auf die Hysterese, die Referenzspannung oder eine Kombination dieser beiden Merkmale einzustellen.

14. Verfahren nach Anspruch 13, bei dem sich der Empfänger am Treiber befindet.

## Revendications

1. Système de communication, comprenant :
un circuit de commande (20 ; 24) comprenant un dispositif de commande (5, 6 ; 45, 46) ayant des niveaux ajustés de tension ou de courant de sortie ; et
un circuit de réception (22 ; 26) comprenant un récepteur principal (13 ; 44) connecté au dispositif de commande, le récepteur (13 ; 44) ayant au moins un canal servant à recevoir un signal principal,
**caractérisé en ce que** :
les paramètres du dispositif de commande (5, 6 ; 45, 46) sont ajustés aux caractéristiques du récepteur via l'utilisation d'un signal produit par un circuit auxiliaire (14 ; 35) reproduisant une ou plusieurs caractéristiques du récepteur principal (13 ; 44).

2. Système de communication selon la revendication 1, où le circuit auxiliaire (14) est incorporé dans le circuit de réception (22).

3. Système de communication selon la revendication 1, où le circuit auxiliaire (35) est incorporé dans le circuit de commande (24).

4. Système de communication selon l'une quelconque des revendications 1 à 3, où le circuit auxiliaire (14) comprend une reproduction du récepteur principal (13).

5. Système de communication selon l'une quelconque des revendications 1 à 4, où les caractéristiques du récepteur comprennent l'hystérésis.

6. Système de communication selon l'une quelconque des revendications 1 à 5, où les caractéristiques du récepteur comprennent la tension de référence.

7. Système de communication selon l'une quelconque des revendications 1 à 6, où le circuit auxiliaire (14 ; 35 ; 41) est incorporé dans un circuit oscillateur en anneau (11, 14 ; 15 ; 31, 34, 35 ; 41, 42, 43), le signal qui vient de l'oscillateur en anneau étant utilisé pour ajuster les paramètres du dispositif de commande sur les caractéristiques du récepteur.

8. Système de communication selon l'une quelconque des revendications 1 à 7, où le circuit auxiliaire est fait sur le même circuit intégré que le circuit intégré utilisé pour faire le récepteur principal ou sur un circuit intégré identique à ce dernier.

9. Système de communication selon l'une quelconque des revendications 1 à 8, où le récepteur auxiliaire (14, 41) est utilisé pour obtenir les informations relatives au récepteur principal (13 ; 44), lesquelles comportent, sans s'y limiter, la tension de terminaison et la tension de référence du récepteur principal.

10. Procédé de communication à faible excursion, comprenant les opérations suivantes :
produire des niveaux de tension ou de courant dans un dispositif de commande (5, 6 ; 45, 46) afin de commander un circuit de communication ;
ajuster le signal de sortie du dispositif de commande (5, 6 ; 45, 46) ;
**caractérisé en ce que** le signal de sortie du dispositif de commande (5, 6 ; 45, 46) est ajusté au moyen d'un signal produit dans un récepteur (13, 44) qui est connecté au dispositif de commande ou dans le dispositif de commande lui-même, le signal étant indicatif d'informations portant des paramètres qui se rapportent auxdits niveaux de tension ou de courant de manière à amener un signal d'entrée présent dans le récepteur (13, 44) à être reçu sous la forme d'une valeur logique "un" et d'une valeur logique "zéro".

11. Procédé selon la revendication 10, où l'excursion de sortie du dispositif de commande est ajusté sur l'hystérésis du récepteur.

12. Procédé selon la revendication 10 ou 11, où la tension de terminaison est ajustée sur la tension de transition du récepteur.

13. Procédé selon l'une quelconque des revendications 10 à 12, comprenant en outre l'utilisation d'un autre récepteur afin d'ajuster le dispositif de commande par rapport à l'hystérésis, à la tension de référence ou à une combinaison de ces deux particularités.

14. Procédé selon la revendication 13, où l'autre récepteur est placé dans le dispositif de commande.
